# EUROPEAN PATENT APPLICATION

(11) **EP 2 316 759 A1**
(43) Date of publication of application: **04.05.2011**
(21) Application number: 09804978.6
(22) Date of filing: 04.08.2009
(51) Int. Cl.: B65G 43/02

(54) **BELT SUPPORT ROLLER MONITORING SYSTEM**

(30) Priority: 05.08.2008 JP 2008201636; 19.02.2009 JP 2009037014; 19.02.2009 JP 2009037031
(71) Applicant: Bridgestone Corporation, Tokyo 104-8340 (JP)
(72) Inventor: SAKAGUCHI, Toshiki, Yokohama-shi Kanagawa 244-8510 (JP)
(74) Representative: Oxley, Robin John George
(86) International application number: PCT/JP2009/063814
(87) International publication number: WO 2010/016495

(57) **Abstract**

The present invention provides a system for monitoring belt support rollers which is simple and can reduce the cost remarkably. A sensor unit 2 is provided on a conveyor belt 1. The sensor unit 2 has a sensor 11 for measuring a physical quantity applied from the belt support rollers 3, a decision device 13 for deciding abnormalities in the belt support rollers 3 based on the measured values from the sensor 11, a memory device 15 for storing data containing the result of the decision, and a transmission device 16 for transmitting the data stored in the memory device 15 to the outside of the conveyor belt 1 via radio waves. A reception station 5 for receiving the data transmitted from the transmission device 16 is provided outside of the conveyor belt 1.

## Description

### TECHNICAL FIELD

The present invention relates to a monitoring system for monitoring abnormalities in belt support rollers disposed in the longitudinal direction of the conveyer belt with a space therebetween and rotatably supporting a conveyor belt, and particularly to a monitoring system capable of efficiently monitoring such abnormalities.

### RELATED ART

A very long conveyor belt has been used for transporting coals and ores to be able to carry them for a long distance, and thus is configured to be supported at several points by number of belt support rollers disposed with a space between them. Such belt support rollers bear the vertical load of the conveyor belt, and are composed of roller rotatably supported at both ends by bearings such as roller bearing to be able to be driven by the running conveyor belt and rotate on their axis, thereby avoiding the belt support rollers from disturbing the travel of the belt conveyor. The belt support rollers, however, move mechanically, so that they possibly break down. Particularly, their bearings may rotate abrasively to disenable the roller to follow the movement of the conveyor belt, which leads a trouble of the conveyor belt.

Heretofore, it is proposed for dealing with such defect in the rotation of the belt support rollers to provide a sensor for detecting the defect and a means for transmitting information of the defect to each of the belt support roller (see, for example, Patent Document 1).

### PRIOR ART DOCUMENT

### PATENT DOCUMENT

Patent Document 1: JP 2005-30588 A

### DISCLOSURE OF THE INVENTION

In the prior art, however, each belt support roller need to have one sensor, which raises the cost significantly. In addition, even if the defect of the belt support roller is detected, a system for collecting the information is indispensable, which needs further cost increase.

The present invention has been made in view of these problems, and it object is to provide a monitoring system for a belt support roller which is simple and can reduce the cost remarkably.

<1> The present invention relates to a monitoring system for monitoring abnormalities in the belt support rollers disposed in the longitudinal direction of the conveyer belt with a space therebetween and rotatably supporting a conveyor belt, the system comprising:
a sensor unit provided on the conveyor belt, the sensor unit having a sensor for measuring a physical quantity applied from the belt support rollers, a decision device for deciding the abnormalities in the belt support rollers based on the measured values from the sensor, a memory device for storing data containing the result of the decision, and a transmission device for transmitting the data stored in the memory device to the outside of the conveyor belt via radio waves; and
a reception station for receiving the data transmitted from the transmission device, the reception station being provided outside of the conveyor belt.

<2> In the monitoring system for monitoring belt support rollers described in the aspect <1> which is according to claim 1, the data of the belt support roller determined as normal by the decision device is not transmitted from the transmission device and only the data of the belt support roller determined as abnormal by the decision device is transmitted from the transmission device.

<3> In the monitoring system for monitoring belt support rollers described in the aspect <2>, the data of the belt support roller determined as normal by the decision device is not stored in the memory device and only the data of the belt support roller determined as abnormal by the decision device is stored in the memory device.

<4> In the monitoring system for monitoring belt support rollers described in the aspect <3>, there are provided a counter device for detecting an order of the belt support rollers detecting the physical quantity along the longitudinal direction of the conveyor belt, and an initiator for initializing the count of the counter device, and only the order is stored in the memory device as the data of the belt support roller determined as abnormal.

<5> In the monitoring system for monitoring belt support rollers described in any one of the aspects <1> to <4>, the sensor is configured to detect the physical quantity continuously during the conveyor belt is running; a quantity which changes when the sensor passes the belt support roller is selected as the physical quantity; the counter device determines the sensor as having passed one of the belt support rollers and increments the count by one when the measured value from the sensor exceeds a predetermined first threshold; and the decision device is configured such that it determines the belt support roller as abnormal when the measured value exceeds a predetermined second threshold.

<6> In the monitoring system for monitoring belt support rollers described in any one of the aspects <1> to <5>, the sensor unit provided with a CPU, and the decision device and the counter device are realized by the CPU.

<7> In the monitoring system for monitoring belt support rollers described in the aspect <6>, the counter device is configured such that the order of the belt support rollers along the longitudinal direction of the conveyor belt is detected on the basis of a signal from the sensor.

<8> In the monitoring system for monitoring belt support rollers described in the aspect <6>, the sensor is provided as a first sensor, a second sensor for detecting whether the conveyor belt passes the belt support rollers is provided in addition to the first sensor, and the counter device is configured to determine the order of the belt support rollers along the longitudinal direction of the conveyor belt on the basis of a signal from the second sensor.

<9> In the monitoring system for monitoring belt support rollers described in the aspect <8>, the second sensor is a noncontact sensor detecting the belt support rollers under a noncontact condition.

<10> In the monitoring system for monitoring belt support rollers described in the aspect <9>, the noncontact sensor is a metal detection sensor for detecting a presence of a metal.

<11> In the monitoring system for monitoring belt support rollers described in the aspect <8>, the second sensor is a push switch having a projection protruding from a bottom surface of the conveyor belt in the belt support roller side, and a switch provided on the base side of the projection and turning from an off-state to an on-state or from an on-state to an off-state when a compressive force acts on the projection in the direction to which the projection protrudes.

<12> In the monitoring system for monitoring belt support rollers described in the aspect <11>, the projection has a tapered portion formed in such a manner that the projection height is decreased toward the transferring direction of the conveyor belt.

<13> In the monitoring system for monitoring belt support rollers described in any one of the aspects <8> to <12>, at least one of the first and second sensors is housed in a exterior material attached to the conveyor belt at the belt support roller side.

<14> In the monitoring system for monitoring belt support rollers described in the aspect <6>, the reception station is configured to periodically receive a data transmission command, and the CPU allows the transmission device to transmit the data to the reception device when the data transmission command is received.

<15> In the monitoring system for monitoring belt support rollers described in the aspect <14>, a start signal transmission station for transmitting a signal demanding a clearance of the data including the data of the counter is provided outside of the conveyor, and the CPU is configured to clear at least the count value when the signal is received from the start signal transmission station.

### EFFECT OF THE INVENTION

According to the aspect <1>, a sensor unit provided on a conveyor belt has a sensor for measuring a physical quantity applied from the belt support rollers, a decision device for deciding the abnormalities in the belt support rollers based on the measured values from the sensor, a memory device for storing data containing the result of the decision, and a transmission device for transmitting the data stored in the memory device to the outside of the conveyor belt via radio waves, and a reception station for receiving the data transmitted from the transmission device is provided outside of the conveyor belt, so that it is possible to maintain information regarding which belt support roller is abnormal in the sensor unit without providing a sensor or a transmission device in each belt support roller and to send the information to the reception station. As a result, abnormalities in the belt support rollers can be monitored with a simple and low-cost system.

According to the aspect <2>, the data of the belt support roller determined as normal by the decision device is not transmitted from the transmission device and only the data of the belt support roller determined as abnormal by the decision device is transmitted from the transmission device, so that the transmission of the necessary information to the reception station can be achieved with a small amount of data transmission, which shortens the communication time to improve the reliability of the communication.

According to the aspect <3>, the data of the belt support roller determined as normal by the decision device is not stored in the memory device and only the data of the belt support roller determined as abnormal by the decision device is stored in the memory device, so that the storage capacity of the memory device can be suppressed and the input-output time of the data with respect to the memory device can be reduced to further improve the reliability of the communication.

According to the aspect <4>, there are provided a counter device for detecting an order of the belt support rollers detecting the physical quantity along the longitudinal direction of the conveyor belt, and an initiator for initializing the count of the counter device, and only the order is stored in the memory device as the data of the belt support roller determined as abnormal, the information regarding which belt support roller is abnormal can be expressed with a minimum amount of data.

According to the aspect <5>, the sensor is configured to detect the physical quantity continuously during the conveyor belt is running; a quantity which changes when the sensor passes the belt support roller is selected as the physical quantity; the counter device determines the sensor as having passed one of the belt support rollers and increments the count by one when the measured value from the sensor exceeds a predetermined first threshold; and the decision device is configured such that it determines the belt support roller as abnormal when the measured value exceeds a predetermined second threshold, so that an identification of the belt support roller and a determination of the abnormality in the identified belt support roller can be performed only by measuring the physical quantity with the sensor. As a result, it is possible to very easily collect the information regarding which belt support roller is abnormal.

According to the aspect <6>, the sensor unit provided with a CPU, and the decision device and the counter device are realized by the CPU, so that the sensor unit can be downsized.

According to the aspect <7>, the counter device is configured such that the order of the belt support rollers along the longitudinal direction of the conveyor belt is detected on the basis of a signal from the sensor, so that.

According to the aspect <8>, the sensor is provided as a first sensor, a second sensor for detecting whether the conveyor belt passes the belt support rollers is provided in addition to the first sensor, and the counter device is configured to determine the order of the belt support rollers along the longitudinal direction of the conveyor belt on the basis of a signal from the second sensor, so that it is possible to detect whether the conveyor belt passes the belt support rollers even when the conveyor belt does not contact the belt support rollers such as in a case of the conveyor belt greatly waving up and down. As a result, the order of the belt support rollers can be securely specified to ensure the identification of the order of the rollers having a trouble in rotation.

According to the aspect <9>, the second sensor is a noncontact sensor detecting the belt support rollers under a noncontact condition, so that the aspect <8> can be realized in a simple manner.

According to the aspect <10>, the noncontact sensor is a metal detection sensor for detecting a presence of a metal, so that the aspect <9> can be realized at a low cost.

According to the aspect <11>, the second sensor is a push switch having a projection protruding from a bottom surface of the conveyor belt in the belt support roller side, and a switch provided on the base side of the projection and turning from an off-state to an on-state or from an on-state to an off-state when a compressive force acts on the projection in the direction to which the projection protrudes, so that the aspect <8> can be easily realized also in this case.

According to the aspect <12>, the projection has a tapered portion formed in such a manner that the projection height is decreased toward the transferring direction of the conveyor belt, so that a resistance occurring when the projection goes over the belt support roller can be reduced.

According to the aspect <13>, at least one of the first and second sensors is housed in an exterior material attached to the conveyor belt at the belt support roller side, so that their durability can be improved.

According to the aspect <14>, the reception station is configured to periodically receive a data transmission command, and the CPU allows the transmission device to transmit the data to the reception device when the data transmission command is received, so that the data is transmitted for the first time when the sensor unit enters an area where the sensor unit can receive the command signal from the reception station. As a result, the data transmission can be minimized.

According to the aspect <15>, a start signal transmission station for transmitting a signal demanding a clearance of the data including the data of the counter is provided outside of the conveyor, and the CPU is configured to clear at least the count value when the signal is received from the start signal transmission station, so that the initiator can be made in a simple configuration.

### BRIEF DESCRIPTION OF THE DRAWINGS

Fig. 1 is a schematic diagram showing an embodiment of the system for monitoring belt support rollers according to the present invention;
Fig. 2 is a sectional view of the conveyor belt;
Fig. 3 is a block diagram showing a configuration of the sensor unit;
Fig. 4 is a graph showing changes of the output signal of the sensor;
Fig. 5 is a graph showing changes of the output signal of the sensor and a second threshold when the sensor unit passes the belt support rollers;
Fig. 6 is a graph showing changes of the output signal of the sensor and another second threshold when the sensor unit passes the belt support rollers;
Fig. 7 is a graph showing changes of the output signal of the sensor and another second threshold when the sensor unit passes the belt support rollers;
Fig. 8 is a schematic diagram showing a first modification of the embodiment of the system for monitoring belt support roller;
Fig. 9 is a schematic diagram showing a second modification of the embodiment of the system for monitoring belt support roller;
Fig. 10 is a sectional view showing an example of an installation of the system for monitoring belt support rollers according to one embodiment;
Fig. 11 is plane and sectional views showing an example of an installation of the system for monitoring belt support rollers according to a second embodiment;
Fig. 12 is a sectional view showing another example of an installation of the system for monitoring belt support rollers according to the second embodiment;
Fig. 13 is plane and sectional views showing an example of an installation of the system for monitoring belt support rollers according to a third embodiment; and
Fig. 14 is a sectional view showing another example of an installation of the system for monitoring belt support rollers according to the third embodiment;

### BEST MODE FOR CARRYING OUT THE INVENTION

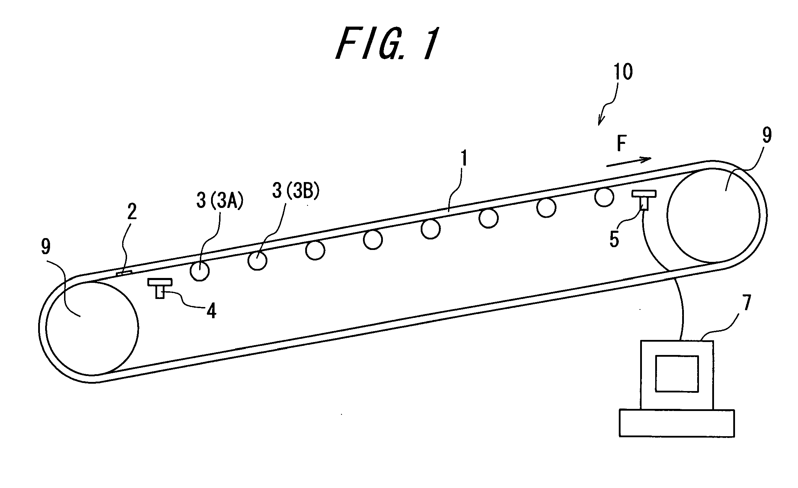

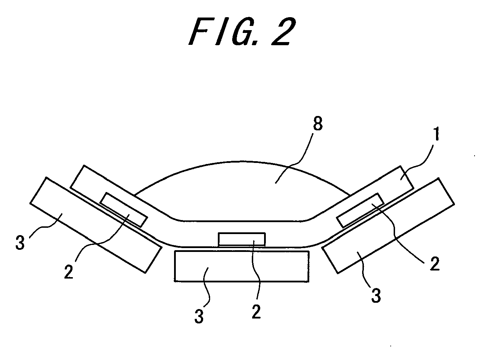

An embodiment of a system for monitoring belt support rollers according to the present invention is now discussed with reference to the drawings. Fig. 1 is a schematic diagram showing a system for monitoring belt support rollers according to this embodiment. A system for monitoring belt support rollers 10 is configured to have a sensor unit 2 embedded in an endless conveyor belt 1, and a reception station 5 for receiving data transmitted from the sensor unit 2. The conveyor belt 10 is supported by driving and driven pulleys 9 disposed at respective ends of the conveyor belt. In addition, as shown in Fig. 2, the conveyor belt 10 is supported by a number of belt support rollers 3 disposed in the longitudinal direction of the conveyor belt with a space therebetween to prevent a large tensile force due to a vertical load from applying to the conveyor belt 1.

The sensor unit 2 also has a function of continuously detecting a physical quantity applied to the conveyor belt such as a shear stress applied to a surface of the conveyor belt in the longitudinal direction, deciding whether each of the belt support rollers is normal or abnormal from the detected information, and transmitting the result of the decision to the reception station via radio waves. To this end, the sensor units 2 are arranged to correspond to respective rows of the belt support rollers 3 aligned in the width direction of the conveyor belt. In the embodiment shown in Fig. 2, there are three rows of the belt support rollers 3, and thus the sensor units 2 are aligned in the width direction to form three rows in order to correspond to the three rows of the belt support rollers 3. It is noted that the reference mark 8 denotes an object to be conveyed.

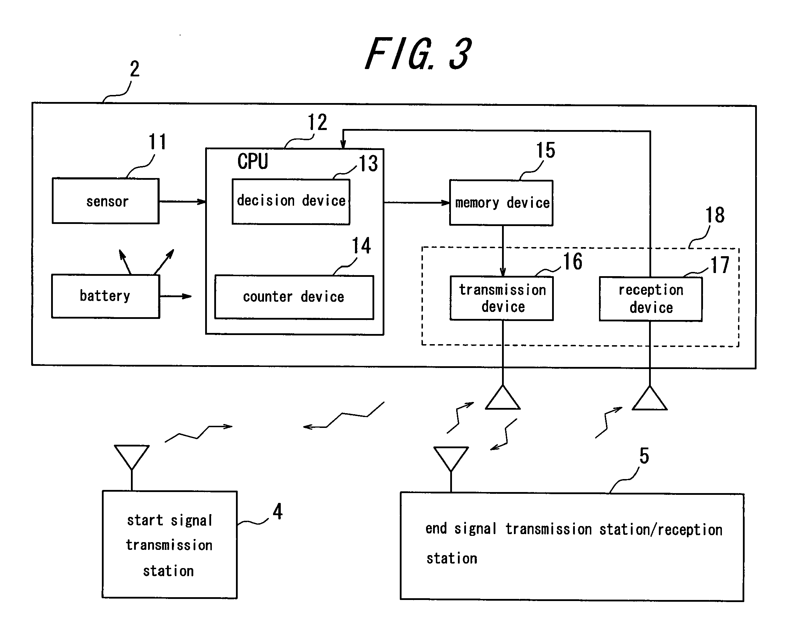

Fig. 3 is a block diagram showing a configuration of the sensor unit 2. The sensor unit 2 has a sensor 11 for measuring a physical quantity applied to the conveyor belt 1, a decision device 13 for deciding whether the belt support roller 3 is in an abnormal condition on the basis of the physical quantity measured at a position corresponding to the belt support roller 3, a counter device 14 for counting an increment of the order of the belt support rollers, a memory device 15 for storing the result of the decision, and a transmission device 16 for transmitting the data stored in the memory device 15 to the reception (and also end signal transmission) station 5. The decision device 13 and the counter device 14 are preferably realized by a CPU 12.

In addition to the sensor unit 2 and the reception station 5, the system for monitoring belt support rollers 10 also has a start signal transmission station 10 transmitting, from the outside of the conveyor belt, a start signal for activating the sensor unit 2 and allowing the counter device 14 to clear a result of the count and to start counting, while the sensor unit 2 is provided with a reception device 17 for receiving the start signal

An end signal transmission station transmitting an end signal for terminating the sensor unit 2 may be provided separately from the reception device 5. Alternatively, as shown in Fig. 3, the reception device 5 may be configured to function as the end signal transmission station as well.

It is preferred that the transmission device 16 and the reception device 17 constituting a part of the sensor unit 2 consist of RFIDs and the reception (and end signal transmission) station 5 and the start signal transmission station 10 are configured so as to transmit a data transmission order signal (and an end signal) and a start signal, respectively, in a short cycle. This allows the sensor units 2 to communicate with each other only when the sensor units 2 approach respective stations 5, 10.

The transmission of the respective signals from the start signal transmission station 4 and the reception station 5 can be activated or terminated by a start signal which is automatically transmitted, for example, once a day at a predetermined time by a remote operation device (not shown) or a computer 7 connected to the stations 4, 5, or by hand.

Hereinafter, a method of monitoring the presence of abnormalities in belt support rollers in which the above-mentioned system for monitoring belt support roller is used is discussed. The sensor units 2 maintain a power-saving mode as a default mode, and are configured to be able to wake up from the power-saving mode upon receiving a signal from the outside via radio waves. When the sensor units 2 moves in the direction F in Fig. 1, approaches the start signal transmission station 4 transmitting a start signal at a short cycle, and reaches an area where radio waves from the start signal transmission station 4 can be detected, the CPU 12 of the sensor unit 2 cancels the power-saving mode and sets the counter value held in the counter device 14 to zero on the basis of the start signal input via the reception device 17. In this state, the CPU 12 may reset the data stored in the memory device 15.

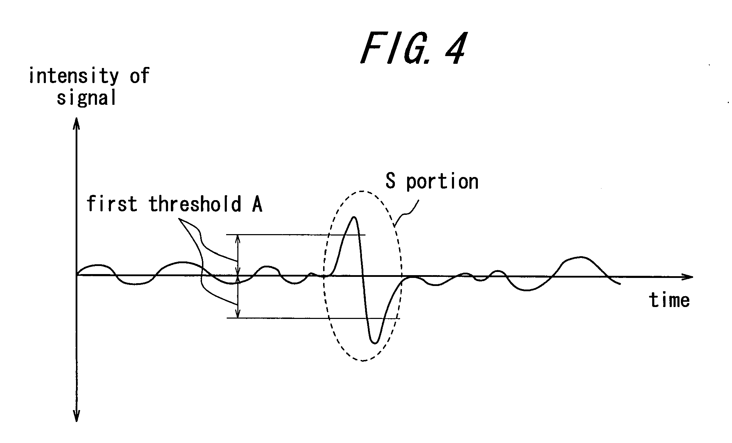

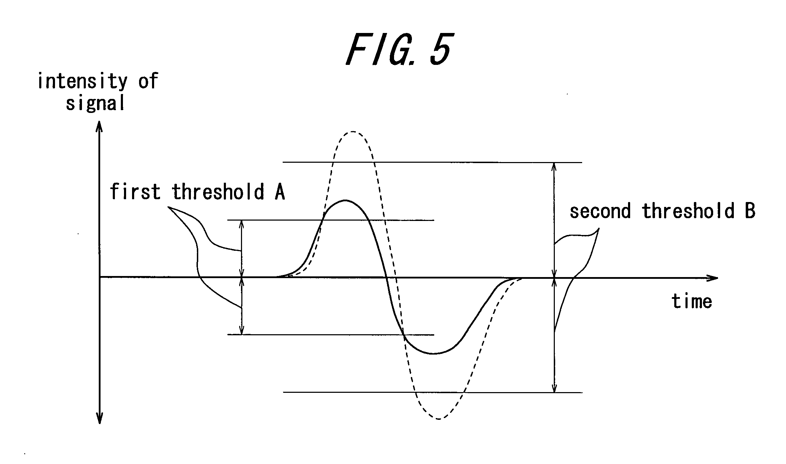

Then, as the conveyor belt 1 travels, the sensor unit 2 leaves the radio wave-detection area of the start signal transmission station 4, and passes over the first belt support roller 3 (3A). When the sensor 11 is configured so as to detect, for example, a shear stress of the surface of the conveyor belt in the longitudinal direction of the conveyor belt, the sensor 11 output continuous waved signals as shown in Figs. 4 and 5 and the signal is entered in the decision device 13 and the counter device 14 constituting a part of the CPU 12.

Fig. 4 is a graph showing changes of the output signal from the sensor 11 with the time on the abscissa and the intensity of the signal on the ordinate. When the sensor 11 passes over the belt support roller 3, a shear stress due to a small slip between the belt support roller 3 and the conveyor belt 1 acts on the inner surface of the conveyor belt 1, and a change in the signal in proportion to the shear stress designated by the S portion in the figure appears. In this state, the output signal at the portion far from the belt support roller 3 is significantly smaller than the first threshold A. It is, thus, possible to set the first threshold A such that the output signal exceeds the first threshold A only when the sensor 11 passes over the belt support roller 2. With this setting, it is possible to detect the sensor 11 passing over the belt support roller 2.

The order of the belt support rollers 3 can be specified by configuring the counter device 14 to increment the count by one when the output signal exceeds the first threshold A. That is to say, for example, the counter value remains at 1 after the sensor 11 passes over the roller 3A and before the sensor 11 reaches the roller 3B, and the counter value remains at 2 after the sensor 11 passes over 3B and before the sensor 11 reaches the roller 3C.

Similarly, Fig. 5 is a graph showing changes (corresponding to the S portion in Fig. 4) of the output signal of the sensor 11 when the sensor unit passes the belt support rollers. The solid line represents a change in a normal condition whereas the broken line represents a change in an abnormal condition. If the belt support roller 3 is broken to lose a proper function of the bearing and does not follow the conveyor belt 1, a large friction force acts on the surface of the conveyor belt 1. In this connection, the second threshold B can be set such that the output signal from the sensor 11 is smaller than the second threshold B when the belt support roller 3 is normal, while the output signal from the sensor 11 exceeds the threshold B for the first time when the belt support roller 3 is abnormal. In this way, the decision device 13 can determine the presence of the abnormality in the operation of the belt support roller 13.

Moreover, the presence of the abnormality in the belt support rollers can be associated with the respective belt support rollers by, for example, determining the presence of the abnormality in the belt support roller immediately after the order of the belt support rollers is specified with the first threshold A, and then assigning the count in the order specified during the determination to the belt support roller subjected to the determination of the presence of the abnormality as its number.

For example, if the count in the order is 1 upon determining the belt support roller as normal and the count in the order is 2 upon determining the belt support roller as abnormal, it means that the first belt support roller is normal and the second belt support roller is abnormal.

The computed result from the decision device 13 and the counter device 14 of the CPU 12 is temporally stored in the memory device 15. After the sensor unit 11 is further moved in the driving direction of the conveyor belt 1 and enters an area where a data transmission order signal transmitted from the reception station 5 at a short cycle can be detected, the signal is input to the CPU 12 via a reception device 17, and the CPU 12 is operated to transmit the data in the memory device 15 via a transmission device 16. The reception station 5 receives the signal from the sensor unit 2, and the data concerning the presence of the abnormality in the belt support roller 3 which is received by the reception station 5 is finally processed by a computer 7 connected to the reception station 5.

Regarding the data stored in the memory device 15, in order to save the storage capacity of the memory device 15, any data concerning the normal belt support roller 3 is not stored in the memory device and only the count in the order corresponding to the abnormalities is stored in the memory device, so that the storage capacity of the memory device can be reduced. For example, when 2, 8 and 11 are stored in the memory device 15 as the data, it means that the second, eighth and eleventh belt support rollers 3 counted from the start signal transmission station 4 are abnormal and the rest of the belt support rollers 3 are normal.

The data thus stored in the memory device 15 has small volume and the amount of data transmitted to the reception station 5 during the data transmission is significantly small, so that the communication time becomes extremely shorter to ensure the data transmission to the reception station.

It is noted that, in the above description, the decision of the abnormalities in the belt support rollers 3 is carried out every time the conveyor belt 1 goes round one lap, but the data may be collected over several laps of the conveyor belt 1. In the latter case, the count in the order of the belt support roller 3 which is determined as abnormal is possibly different from the actual count in the order due to a fluctuation of the detection or the like. The reliability of the determination can be improved by ultimately determining the abnormality only if the appearance rate of the abnormality in the belt support roller is not less than a given value.

Examples are shown below. Table 1 shows the results of the primary determination in which the count in the order with respect to the belt support roller determined as abnormal in the first, second and third laps of the conveyor belt 1 are shown. Table 2 shows rates of abnormalities calculated for the respective belt support rollers from the results of the primary determination. The results are shown in Table 2 provided that the rate of 50 % or more is ultimately determined as abnormal.

**[Table 1]**

| Turns of the conveyor belt | The order of the belt support roller detected as abnormal | | | |
|---|---|---|---|---|
| 1st turn | 50 | 125 | 224 | - |
| 2nd turn | 43 | 125 | 224 | - |
| 3rd turn | 43 | 125 | 161 | 262 |

**[Table 2]**

| The order of the belt support roller | NG rate in primary determination | Ultimate determination |
|---|---|---|
| 43 | 67% | NG |
| 50 | 33% | OK |
| 125 | 100% | NG |
| 161 | 33% | OK |
| 224 | 67% | NG |
| 262 | 33% | OK |

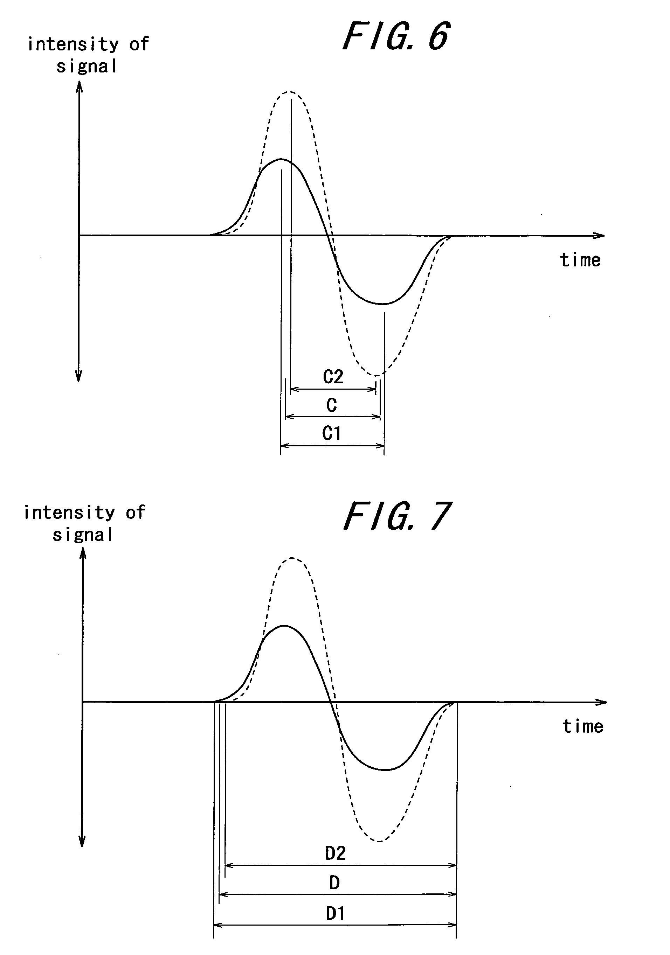

In the above explanation, the second threshold having a larger signal level than that of the first threshold A is employed to determine the presence of abnormalities in the belt support rollers 3, but the second threshold may be alternatively any value on the time axis. For example, as shown in Fig. 6 where the solid line represents a normal wave form and the broken line represents an abnormal wave form, the second threshold C is applied to the time period T1 which is from a peak in the positive side to a peak in the negative side, and a case where a value C1 in the actual wave form at the time T1 is larger than the second threshold C is determined as normal while a case where a value C2 in the actual wave form at the time T1 is smaller than the threshold C is determined as abnormal.

Similarly, as shown in Fig. 7, the second threshold D is applied, as a threshold on the time axis, to the time period T2 which is from the start point in the positive side to the end point in the negative side, and a case where value D1 in the actual wave form at the time T2 is larger than the second threshold D is determined as normal while a case where a value D2 in the actual wave form at the time T2 is smaller than the threshold D is determined as abnormal.

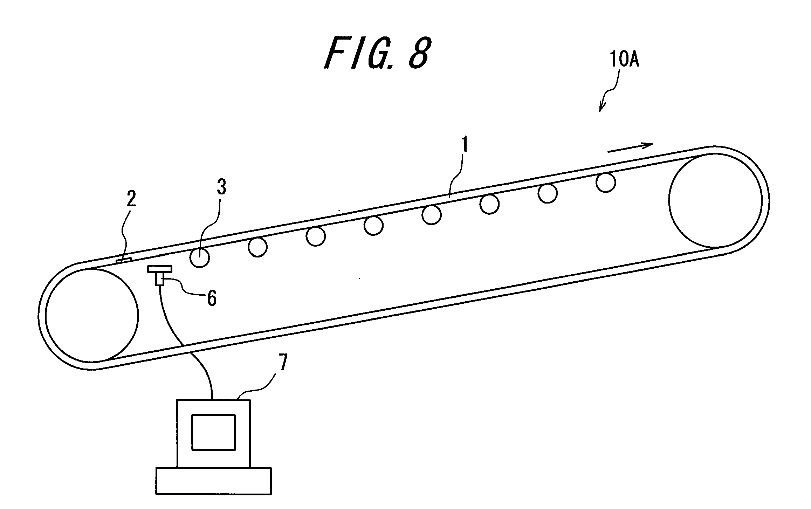

Fig. 8 is a schematic diagram showing a first modification of the embodiment according to the present invention. The system for monitoring belt support rollers 10A of this modification is different from the system for monitoring belt support rollers 10 of the above-mentioned embodiment in a point that an external station 6 is arranged to integrate the functions of the reception station 5 and the start signal transmission station 4 in the system for monitoring belt support rollers 10. This delays the timing for transmitting the data stored in the memory device 15 to the outside, but the basic functions remain unchanged.

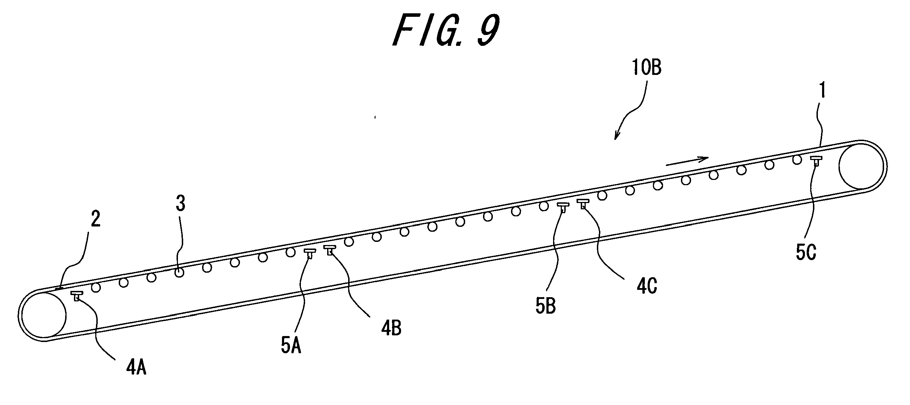

Fig. 9 is a schematic diagram showing a second modification of the embodiment according to the present invention. The system for monitoring belt support rollers 10B of this modification is different from the system for monitoring belt support rollers 10 of the above-mentioned embodiment only in a point that a series of belt support rollers are divided into several groups, and each group is provided with a start signal transmission station 4A, 4B, 4C and a reception station 5A, 5B, 5C. If the number of the belt support rollers 3 is excess, the passage of the sensor 11 over the belt support roller 2 likely fails to be detected with the first threshold A. In this case, there may be an inconsistency between an actual order of the belt support roller 3 and a detected order of the belt support roller.

The incidence rate of the inconsistency can be reduced as a group by decreasing the number of the belt support rollers subjected to the data transmission to the reception station, as in the system for monitoring belt support rollers of the present modification. In this case, the data received by the reception stations 5A, 5B, 5C may be individually processed by computers connected to the reception station 5A, 5B, 5C, respectively. Alternatively, only memory devices for storing data which may be hard disks are connected to the reception station 5A, 5B, 5C, and these memory devices extract the data separately.

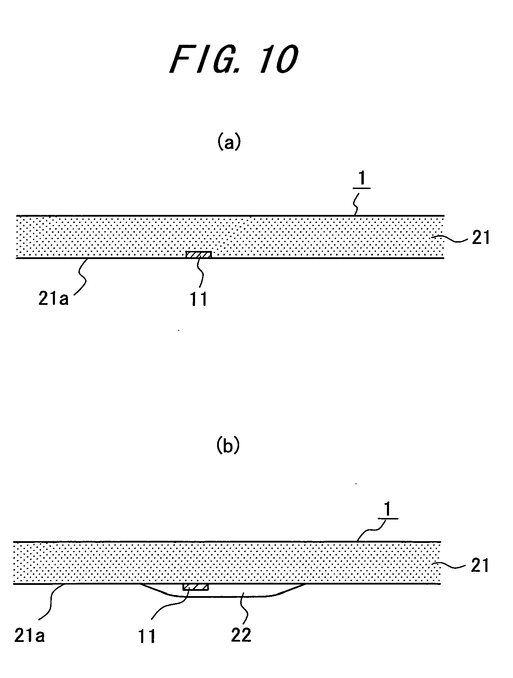

Here, the sensor 11 may be disposed in a belt body 21 of the belt 1 as shown in Fig. 10(a), or in an exterior material 22 which is attached to a face 21a of the belt body 21 at the side adjacent to the belt support roller as shown in Fig. 10(b).

As described in the above embodiments, the counter device 14 may be configured to detect the order of the belt support rollers 3 in the longitudinal direction of the conveyor belt on the basis of the signal from the sensor 11, which is referred to as the first embodiment. As alternative second and third embodiments, the sensor 11 is provided as a first sensor, and a second sensor may be provided in addition to the first sensor to determine whether the conveyor belt 1 passes the belt support rollers 3. In this case, the counter device 14 determines the order of the conveyor support rollers 3 along the longitudinal direction of the conveyor belt on the basis of the signal from the second sensor. The second sensor is preferred as it can detect the belt support rollers 3 even when the conveyor belt 1 does not contact the belt support rollers 3 such as in a case of the conveyor belt oscillates.

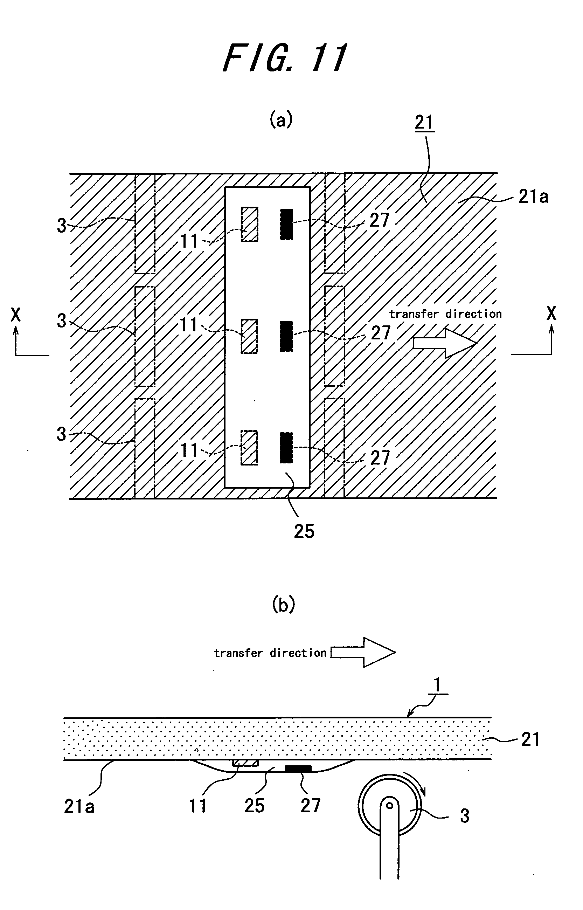

Fig. 11 shows the second embodiment in which a noncontact sensor for detecting the belt support rollers in a noncontact state is used as the second sensor, with a metal detection sensor being recited by way of example of a noncontact sensor. Fig. 11(a) is a plane view of the conveyor belt 1 as viewed from the belt support roller side, and Fig. 11(b) is its sectional view taken along the line X-X. It is noted that the position of the belt support roller 3 is represented by a dashed-two dotted line. The first sensors 11 and the metal detection sensors 27 are disposed in the exterior material 25 attached to the face 21a of the belt body 21 of the conveyor belt 1 at the belt support roller side. One first sensor 11 and one metal detection sensor 27 are provided at each of three widthwise positions of the conveyor belt corresponding to respective three belt support rollers 3.

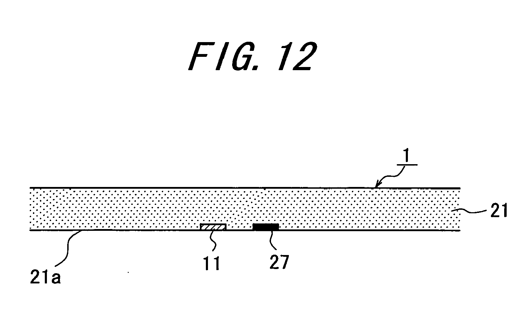

In addition to the arrangement shown in Fig. 11, the first sensor 11 and the metal detection sensor 27 may be disposed in the belt body 21 as shown in Fig. 12.

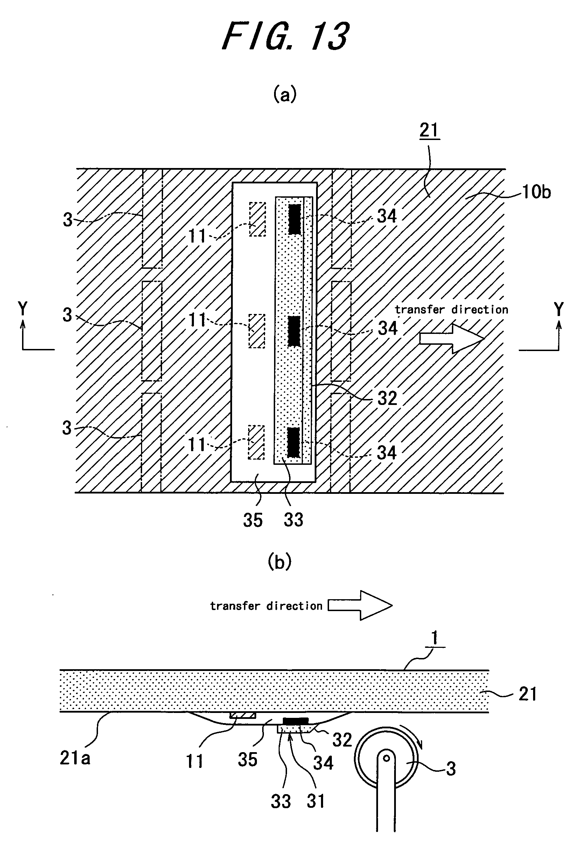

Fig. 13 shows the second embodiment in which a push switch is used as the second sensor. Fig. 13 (a) is a plane view of the conveyor belt 1 as viewed from the belt support roller side, and Fig. 13(b) is its sectional view taken along the Y-Y line. It is noted that the position of the belt support roller 3 is represented by a dashed-two dotted line. The push switch 31 has a projection 33 protruding from a bottom surface 2 1 a of the conveyor belt 1 in the belt support roller side, and a switch 34 provided on the base side of the projection 33 and turning from an off-stat to an on-state or from an on-state to an off-state when a compressive force acts on the projection 33 in the direction to which the projection 33 protrude. In the shown case, the first sensors 11 and the switch 34 are disposed in the exterior material 35 attached to the face of the belt body 21 of the conveyor belt 1 at the belt support roller side. One first sensor 11 and one switch 34 are provided at each of three widthwise positions of the conveyor belt corresponding to respective three belt support rollers 3.

The projection 33 may continue in the width direction of the conveyor belt 1. The projection preferably has a tapered portion 32 formed in such a manner that the projection height is decreased toward the transferring direction of the conveyor belt. This can relieve the resistance occurring when the projection 33 goes over the belt support roller 3.

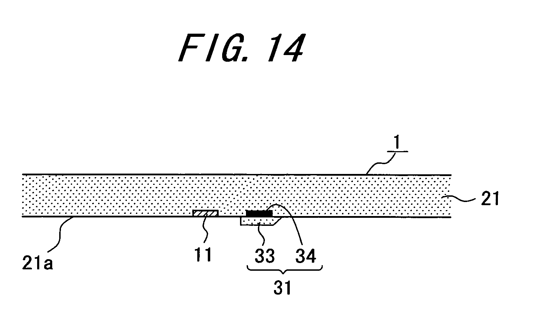

In addition to the arrangement shown in Fig. 13, the embodiment that a push switch 31 is used as the second sensor may employ an arrangement shown in Fig. 14 in which the projection 33 is directly attached to the face 21a of the belt body 21 at the belt support roller side, and the first sensor 11 and the switch 34 are disposed in the belt body 21.

### REFERENCE SYMBOLS

- 1: conveyor belt
- 2: sensor unit
- 3, 3A, 3B: belt support roller
- 4, 4A, 4B, 4C: start signal transmission station
- 5, 5A, 5B, 5C: reception station
- 6: external station
- 8: object to be transferred
- 9: pulley
- 7: computer
- 10, 10A, 10B: system for monitoring belt support rollers
- 11: sensor (first sensor)
- 12: CPU
- 13: decision device
- 14: counter device
- 15: memory device
- 16: transmission device
- 17: reception device
- 18: RFID
- 21: belt body
- 21a: face of the belt body at the belt support roller side
- 25: exterior material
- 27: metal detection sensor
- 31: push switch
- 32: tapered portion
- 33: projection
- 34: switch

## Claims

1. A monitoring system for monitoring abnormalities in the belt support rollers disposed in the longitudinal direction of the conveyer belt with a space therebetween and rotatably supporting a conveyor belt, the system comprising:
a sensor unit provided on the conveyor belt, the sensor unit having a sensor for measuring a physical quantity applied from the belt support rollers, a decision device for deciding the abnormalities in the belt support rollers based on the measured values from the sensor, a memory device for storing data containing the result of the decision, and a transmission device for transmitting the data stored in the memory device to the outside of the conveyor belt via radio waves; and
a reception station for receiving the data transmitted from the transmission device, the reception station being provided outside of the conveyor belt.

2. The monitoring system for monitoring belt support rollers according to claim 1, wherein the data of the belt support roller determined as normal by the decision device is not transmitted from the transmission device and only the data of the belt support roller determined as abnormal by the decision device is transmitted from the transmission device.

3. The monitoring system for monitoring belt support rollers according to claim 2, wherein the data of the belt support roller determined as normal by the decision device is not stored in the memory device and only the data of the belt support roller determined as abnormal by the decision device is stored in the memory device.

4. The monitoring system for monitoring belt support rollers according to claim 3, further comprising a counter device for detecting an order of the belt support rollers detecting the physical quantity along the longitudinal direction of the conveyor belt, and an initiator for initializing the count of the counter device, wherein only the order is stored in the memory device as the data of the belt support roller determined as abnormal.

5. The monitoring system for monitoring belt support rollers according to any one of claims 1 to 4, wherein the sensor is configured to detect the physical quantity continuously during the conveyor belt is running; a quantity which changes when the sensor passes the belt support roller is selected as the physical quantity; the counter device determines the sensor as having passed one of the belt support rollers and increments the count by one when the measured value from the sensor exceeds a predetermined first threshold; and the decision device is configured such that it determines the belt support roller as abnormal when the measured value exceeds a predetermined second threshold.

6. The monitoring system for monitoring belt support rollers according to any one of claims 1 to 5, wherein the sensor unit provided with a CPU, and the decision device and the counter device are realized by the CPU.

7. The monitoring system for monitoring belt support rollers according to claim 6, wherein the counter device is configured such that the order of the belt support rollers along the longitudinal direction of the conveyor belt is detected on the basis of a signal from the sensor.

8. The monitoring system for monitoring belt support rollers according to claim 6, wherein the sensor is provided as a first sensor, a second sensor for detecting whether the conveyor belt passes the belt support rollers is provided in addition to the first sensor, and the counter device is configured to determine the order of the belt support rollers along the longitudinal direction of the conveyor belt on the basis of a signal from the second sensor.

9. The monitoring system for monitoring belt support rollers according to claim 8, wherein the second sensor is a noncontact sensor detecting the belt support rollers under a noncontact condition.

10. The monitoring system for monitoring belt support rollers according to claim 9, wherein the noncontact sensor is a metal detection sensor for detecting a presence of a metal.

11. The monitoring system for monitoring belt support rollers according to claim 8, wherein the second sensor is a push switch having a projection protruding from a bottom surface of the conveyor belt in the belt support roller side, and a switch provided on the base side of the projection and turning from an off-state to an on-state or from an on-state to an off-state when a compressive force acts on the projection in the direction to which the projection protrudes.

12. The monitoring system for monitoring belt support rollers according to claim 11, wherein the projection has a tapered portion formed in such a manner that the projection height is decreased toward the transferring direction of the conveyor belt.

13. The monitoring system for monitoring belt support rollers according to any one of claims 8 to 12, wherein at least one of the first and second sensors is housed in an exterior material attached to the conveyor belt at the belt support roller side.

14. The monitoring system for monitoring belt support rollers according to claim 6, wherein the reception station is configured to periodically receive a data transmission command, and the CPU allows the transmission device to transmit the data to the reception device when the data transmission command is received.

15. The monitoring system for monitoring belt support rollers according to claim 14, wherein a start signal transmission station for transmitting a signal demanding a clearance of the data including the data of the counter is provided outside of the conveyor, and the CPU is configured to clear at least the count value when the signal is received from the start signal transmission station.
